# EUROPÄISCHE PATENTSCHRIFT

(11) **EP 3 234 539 B1**
(45) Veröffentlichungstag und Bekanntmachung des Hinweises auf die Patenterteilung: **28.06.2023**
(21) Anmeldenummer: 15801430.8
(22) Anmeldetag: 27.11.2015
(51) Int. Cl.: G01M 11/08, G01L 3/16

(54) **VORRICHTUNG UMFASSEND EINEN INJEKTOR UND EINEN SENSOR**
DEVICE COMPRISING AN INJECTOR AND A SENSOR
DISPOSITIF COMPRENANT UN INJECTEUR ET UN CAPTEUR

(30) Priorität: 18.12.2014 DE 102014226440
(43) Veröffentlichungstag der Anmeldung: 25.10.2017
(73) Patentinhaber: Robert Bosch GmbH, 70442 Stuttgart (DE)
(72) Erfinder: GIEZENDANNER-THOBEN, Robert, 70839 Gerlingen (DE); STUKE, Bernd, 71229 Leonberg (DE)
(86) Internationale Anmeldenummer: PCT/EP2015/077915
(87) Internationale Veröffentlichungsnummer: WO 2016/096375

(56) Entgegenhaltungen:
- US-A1- 2004 057 645
- US-A1- 2012 073 361
- US-B1- 6 622 549

## Beschreibung

Die Erfindung betrifft eine Vorrichtung umfassend einen Injektor und einen optischen Sensor. Die Erfindung betrifft ferner ein Kraftstoffeinspritzsystem, das wenigstens eine derartige Vorrichtung umfasst. Zudem betrifft die Erfindung ein Verfahren zum Betreiben einer derartigen Vorrichtung.

### Stand der Technik

Aufgrund der geltenden gesetzlichen Vorschriften zur Einhaltung vorgeschriebener Abgas- bzw. Emissionsgrenzwerte in Kraftfahrzeugen mit Verbrennungsmotoren besteht ein Interesse darin, die Druckverhältnisse in den einzelnen Injektoren eines Verbrennungsmotors im Hinblick auf deren Einspritzverhalten laufend zu erfassen, um möglichst frühzeitig Alterungs- oder Drifteffekte der Injektoren feststellen zu können, welche dazu führen, dass vorgegebene Spezifikationen des Einspritzsystems nicht mehr eingehalten werden. Gängige Ansätze bzw. Konzepte beispielsweise bei Common-Rail-Injektoren gehen von der Erfassung des Raildrucks mittels Drucksensoren aus. Als Drucksensoren werden üblicherweise elektrische Sensoren, z.B. Dehnungsmessstreifen, eingesetzt, die anfällig für elektromagnetische Stör- oder Streufelder sind, welche die Messresultate verfälschen können.

Aus der US1012/0073361 A1 und aus der US 6,622,549 B1 sind Kraftstoffinjektoren mit optischem Sensor bekannt.

Aus der US 2004/0057645 A1 ist ein Brennraummesssystem mit einer optischen Faser, die ein Bragg-Gitter umfasst, bekannt.

### Vorteile der Erfindung

Die Vorrichtung mit den Merkmalen des Patentanspruchs 1 hat den Vorteil, dass das Einspritzverhalten eines Injektors und mithin dessen normgerechte Funktionsfähigkeit durch optische Signalgenerierung sicher detektierbar und überwachbar ist, wobei eine signifikant geringere Empfindlichkeit der erfassten Signale gegenüber elektromagnetischen Störeinflüssen bei nahezu verlustfreier Signalübertragung und eine hohe Messgenauigkeit im Vergleich zu elektrischer Sensorik erzielbar ist. Dazu umfasst die Vorrichtung einen Injektor und einen optischen Sensor, der abhängig vom Druck und/oder kraftabhängig ein eingespeistes optisches Signal im Injektor in mindestens einer seiner Eigenschaften ändert.

Weitere vorteilhafte Weiterbildungen und Ausgestaltungen der Erfindung ergeben sich durch die in den Unteransprüchen aufgeführten Maßnahmen.

Gemäß einer Ausgestaltung der Erfindung weist der optische Sensor ein Faser-Bragg-Gitter auf, welches im am Faser-Bragg-Gitter reflektierten optischen Signal die Wellenlänge als Eigenschaft im Vergleich zum eingespeisten Signal ändert. Gemäß einer weiteren Ausgestaltung der Erfindung ist eine druckabhängig verformbar ausgebildete Wirkfläche vorgesehen, welche im zur Detektion rückgeführten optischen Signal die Intensität als Eigenschaft im Vergleich zum eingespeisten Signal ändert.

Die Erfindung sieht vor, dass der optische Sensor eine Lichtleitfaser mit einem Faser-Bragg-Gitter aufweist, wobei die Lichtleitfaser in dem Injektor verankert angeordnet ist, um bei Einspeisung von Licht aus einer Lichtquelle in die Lichtleitfaser ein erstes optisches Signal zu bilden, das als Wellenlängenänderung von am Faser-Bragg-Gitter reflektiertem Licht gegenüber dem eingespeisten Licht ein Maß für eine auf die Lichtleitfaser wirkende Kraft aus einem Druckraum des Injektors ist, wobei ferner eine druckabhängig verformbare Wirkfläche im Injektor ausgebildet ist, um Licht aus der Lichtleitfaser in Abhängigkeit vom Verformungsgrad der Wirkfläche in die Lichtleitfaser rückzukoppeln, wobei die Intensität des rückgekoppelten Lichts als zweites optisches Signal ein Maß für einen die Wirkfläche verformenden Druck aus dem Druckraum ist.

Einerseits wird somit die Eigenschaft des in der Lichtleitfaser integrierten Faser-Bragg-Gitters ausgenutzt, um die von der einwirkenden Kraft abhängige Dehnung bzw. Längenänderung der Lichtleitfaser anhand einer Wellenlängenänderung von am Faser-Bragg-Gitter reflektierten Licht zu erfassen, während andererseits für die Druckerfassung die Wirkfläche des Injektors und die Lichtleitfaser zusammenwirkend ein optisches Abbildungssystem bilden, bei welchem sich der druckabhängige mechanische Verformungsgrad der Wirkfläche und somit deren optisches Abbildungsverhalten für aus der Lichtleitfaser einfallendes Licht als Funktion des einwirkenden Drucks ändert, so dass sich im gleichen Maße der Anteil der an der Wirkfläche reflektierten und dann in die Lichtleitfaser eingekoppelten Lichtstrahlen, also der Grad der optischen Rückkopplung, ändert.

Zweckmäßigerweise sind Auswertemittel vorgesehen, welche die beiden optischen Signale miteinander verknüpfen. Eine Ausgestaltung der Erfindung kann darin bestehen, dass Auswertemittel vorgesehen sind, welche die beiden optischen Signale miteinander verknüpfen, um eines der beiden Signale anhand des jeweils anderen Signals zu plausibilisieren. Dadurch lässt sich unter bestimmten Randbedingungen die Funktionssicherheit der beiden an sich unterschiedlichen optischen Signale routinemäßig überprüfen; diese Randbedingungen liegen dann vor, wenn der Injektor im stationären Betrieb arbeitet, d.h. wenn sich der Injektor entweder in Offenstellung oder in Schließstellung befindet, da in diesem stationären Betriebszustand praktisch keine Aktorkräfte aufgrund von Schaltvorgängen auftreten und mithin sowohl mit dem aufgrund des Faser-Bragg-Gitter-Prinzips generierten optischen Signal wie auch mit dem aufgrund des Wirkflächenprinzips generierten optischen Signal Druckwellen detektiert werden. Eine Fehlfunktion des einen optischen Signals ist somit praktisch instantan anhand der Funktion des anderen optischen Signals überprüfbar und umgekehrt.

Gemäß einer bevorzugten und besonders vorteilhaften Ausführungsform sind Auswertemittel vorgesehen, welche die beiden optischen Signale miteinander durch Korrelation verknüpfen, um insbesondere das Öffnungs- und Schließverhalten einer Ventilnadel des Injektors, insbesondere den Öffnungs- und Schließzeitpunkt zu bestimmen. Dadurch ist das Einspritzverhalten des Injektors nicht nur im stationären Injektorbetrieb überwachbar, sondern auch während der Öffnungs- und Schließphase, wenn nämlich zusätzlich zum Druck noch Aktor-Kräfte aufgrund von Schaltvorgängen auftreten bzw. wirken; diese Aktor-Kräfte sind dann mittels des aufgrund des Faser-Bragg-Gitter-Prinzips generierten optischen Signals des optischen Sensors detektierbar. Insbesondere in sog. Common-Rail-Einspritzsystemen auftretende Druckschwingungen, die z.B. von periodischen Druckpulsationen einer Pumpe herrühren und dann im Injektorkörper mehrfach reflektiert werden, führen zu Überlagerungseffekten, die in der Regel verhindern, dass der Kraftverlauf bei Schaltvorgängen lediglich aus einer simplen Analyse von Drucksignalen ableitbar ist; durch die Kombination der beiden unterschiedlichen optischen Signale und deren Korrelation ist es jedoch möglich, auch und gerade unter solchen Bedingungen das Öffnungs- und Schließverhalten des Injektors zu bestimmen.

Aufgrund der gleichzeitigen bzw. kombinierten optischen Messung zweier physikalischer Effekte bzw. Größen, nämlich Kraft und Druck, und der Bildung einer zeitlichen Korrelation zwischen den dabei erfassten unterschiedlichen optischen Signalen, ist daraus der während einer laufenden Messreihe erfolgende jeweilige Öffnungs- und Schließzeitpunkt der Ventilnadel ermittelbar, die den Druckraum des Injektors axialverschieblich durchsetzt und während eines Öffnungs- und Schließvorgangs im Wesentlichen Änderungen der im Druckraum herrschenden Kraft- und Druckverhältnisse verursacht, welche sich auf den Injektorkörper und den darin integrierten optischen Sensor auswirken.

Durch die Korrelation beider optischer Signale ist mithin das Öffnungs- und Schließverhalten der Ventilnadel ermittelbar und somit auch das Einspritzverhalten des Injektors der Vorrichtung überwachbar, so dass eine Fehlfunktion des Injektors frühzeitig erkennbar ist. Insbesondere bei kleinen Einspritzmengen, z.B. während der Voreinspritzung, ist mittels der Korrelation beider optischer Signale die Ermittlung des Öffnungs- und Schließverhaltens der Ventilnadel zuverlässig möglich. Die erfindungsgemäße Vorrichtung eignet sich mithin für die sog. On-Board-Diagnose (OBD).

Eine bevorzugte Ausgestaltung der Erfindung sieht vor, dass die Lichtleitfaser in einer Sacklochbohrung des Injektors verankert ist, wobei der Boden der Sacklochbohrung als Wirkfläche ausgebildet ist. Indem die Wirkfläche gekrümmt ausgebildet ist, beispielsweise in der Form eines Parabolspiegels, arbeitet die Wirkfläche in optisch abbildender Funktion, d.h. ankommende Lichtstrahlen werden gebündelt reflektiert und zwar in Abhängigkeit vom Verformungsgrad der Wirkfläche. Ist die Wirkfläche vorzugsweise konkav gekrümmt, wobei ihre fokale Ebene in unverformten Zustand der Wirkfläche etwa auf dem der Wirkfläche zugewandten Ende der Lichtleitfaser liegt, so werden an der unverformten Wirkfläche reflektierte Lichtstrahlen auf das der Wirkfläche zugewandte Ende der Lichtleitfaser fokussiert. Dabei ist der optische Rückkopplungsgrad in diesem Fall sehr hoch. Ist die Wirkfläche aufgrund einwirkenden Drucks aus dem Druckraum hingegen verformt, so ändert sich die Fokussierung der Lichtstrahlen und mithin auch der optische Rückkopplungsgrad.

Eine bevorzugte Ausführungsform der Erfindung sieht vor, dass zwischen der Wirkfläche und einem der Wirkfläche zugewandten Ende der Lichtleitfaser ein Zwischenraum ausgebildet ist, der als Reflektorraum für aus dem Ende der Lichtleitfaser austretendes und dann an der Wirkfläche reflektiertes Licht dient.

Eine Ausgestaltung der Erfindung kann darin bestehen, dass die Sacklochbohrung so in dem Injektor verläuft, dass der als Wirkfläche dienende Boden der Sacklochbohrung an den Druckraum des Injektors angrenzt. Aufgrund der Nähe des Bodens der Sacklochbohrung zum Druckraum wird eine optimale drucktechnische Ankopplung des Bodens und mithin des Reflektorraums an den Druckraum erzielt, welche das Signal-Rausch-Verhältnis des darauf basierenden optischen Signals günstig beeinflusst.

Um die Positionierung der Lichtleitfaser bezüglich des als Wirkfläche dienenden Bodens der Sacklochbohrung zu erleichtern, ist gemäß einer weiterbildenden Maßnahme ein hülsenförmiges Element vorgesehen, welches ein dem Boden der Sacklochbohrung zugewandtes Ende der Lichtleitfaser aufnimmt ist und welches in die Sacklochbohrung einführbar ist, um einen vorbestimmten Abstand zwischen dem Ende der Lichtleitfaser und dem als Wirkfläche dienenden Boden der Sacklochbohrung einzustellen. Dadurch dient das hülsenförmige Element als Abstandshalter für die Lichtleitfaser.

Indem das hülsenförmige Element aus lichtabsorbierendem Material gebildet ist, wird sichergestellt, dass nur solche Lichtstrahlen in die Lichtleitfaser rückgekoppelt werden, die bei der Reflexion am Boden der Sacklochbohrung direkt auf das dem Boden zugewandte Ende der Lichtleitfaser abgebildet werden, da vom Boden der Sacklochbohrung reflektierte und am Rand der Hülse auftreffende Lichtstrahlen absorbiert und somit nicht in Richtung des Bodens zurückgeworfen werden.

Gemäß einer Ausgestaltung der Erfindung ist vorgesehen, dass die Lichtquelle spektral breitbandiges Licht abstrahlt, das vorzugsweise im spektral sichtbaren Wellenlängenbereich zwischen etwa 350 nm bis etwa 680 nm liegt, um das spektrale Antwortverhalten insbesondere des Faser-Bragg-Gitters auf einfallendes Licht zu erfassen. Durch die Verwendung von sichtbarem Licht ist eine besonders einfache Justage der optischen Komponenten möglich.

Zur Detektion der beiden optischen Signale ist wenigstens ein Photodetektor vorgesehen, um einerseits an dem Faser-Bragg-Gitter reflektiertes Licht und andererseits von der Wirkfläche in die Lichtleitfaser rückgekoppeltes Licht zu erfassen. Um die Wellenlängenänderung des am Faser-Bragg-Gitter reflektierten Lichts beim Austritt aus der Lichtleitfaser zu erfassen und die beiden unterschiedlichen optischen Signale voneinander trennen zu können, ist dem Photodetektor wenigstens ein spektral selektives Element vorgeschaltet. Dabei kann das spektral selektive Element als Monochromator ausgebildet sein.

Eine dazu alternative Ausführungsform der Erfindung kann darin bestehen, dass ein zur Auskopplung von Licht zu dem wenigstens einen Photodetektor vorgesehenes Ende der Lichtleitfaser eine Jod-Beschichtung aufweist. Da Jod (I₂) für Licht im Spektralbereich um 540 nm ± 10 nm charakteristische Absorptionsbanden mit steil verlaufenden Flanken aufweist, erfährt Licht, das wegen der Reflexion am - aufgrund einwirkender Kraft - gedehnten Faser-Bragg-Gitter der Lichtleitfaser mit einer verschobenen Wellenlänge am Ende der Lichtleitfaser ankommt, eine andere Absorption bzw. Abschwächung als Licht mit unverschobener Wellenlänge. Bei bekannter Steilheit des charakteristischen I₂- Absorptionsverlaufs im Spektralbereich um 540 nm ± 10 nm, ist es somit möglich, anhand von am Photodetektor gemessenen elektrischen Signalintensitäten die jeweils zugeordneten Wellenlängenverschiebungen des optischen Signals eindeutig zu bestimmen. Dadurch erfüllt die Jod-Beschichtung die Funktion einer Spektralanalyse des aus der Lichtleitfaser austretenden Lichts.

Eine zweckmäßige Ausgestaltung der Erfindung sieht vor, dass die Lichtquelle und der wenigstens eine Photodetektor mit dem wenigstens einen vorgeschalteten spektral selektiven Element an einem der Wirkfläche abgewandten Ende der Lichtleitfaser angeordnet sind. Typischerweise ragt das der Wirkfläche abgewandte Ende der Lichtleitfaser aus dem Injektorkörper heraus, so dass die Auswertemittel zusammen mit der Lichtquelle disloziert vom Injektor angeordnet werden können.

Gemäß einer bevorzugten Ausgestaltung der Erfindung umfassen die Auswertemittel eine Prozessrecheneinheit, welche dem Photodetektor nachgeschaltet ist, um die vom Photodetektor in Reaktion auf die beiden optischen Signale gelieferten elektrischen Ausgangssignale in Echtzeit verarbeiten und in Korrelation zueinander setzen zu können.

Eine vorteilhafte Ausführungsform der Erfindung kann darin bestehen, dass die Auswertemittel eine Auswerteelektronikeinheit umfassen, welche als Schnittstelle zwischen dem Photodetektor und der Prozessrecheneinheit dient, um die vom Photodetektor - in Reaktion auf die eingangsseitig anstehenden optischen Signale - ausgangsseitig in analoger Form erzeugten elektrischen Signale in digitale Daten umzusetzen, die dann von der Prozessrecheneinheit verarbeitbar sind.

Ein Kraftstoffeinspritzsystem, welches wenigstens eine derartige Vorrichtung umfasst, eignet sich vorteilhaft für die On-Board-Diagnose.

Bei dem erfindungsgemäßen Verfahren, das zum Betreiben der erfindungsgemäßen Vorrichtung geeignet ist, ist vorgesehen, dass Licht mit wenigstens einer vorbekannten Eigenschaft in den Injektor eingespeist wird und in zurückgeführtem Licht eine Änderung in der Eigenschaft erfasst wird. Es können auch mehrere verschiedene Eigenschaften in zurückgeführtem Licht im Vergleich zu den Eigenschaften des eingespeisten Lichts gleichzeitig erfasst werden, um Änderungen der verschiedenen Eigenschaften im zurückgeführten Licht zu bestimmen. Gemäß einer Ausgestaltung des Verfahrens wird/werden als Eigenschaft/Eigenschaften des Lichts die Wellenlänge und/oder Intensität untersucht.

Dabei werden ein erstes optisches Signal und ein zweites optisches Signal gebildet, wobei das erste optische Signal als Wellenlängenänderung von am Faser-Bragg-Gitter reflektiertem Licht gegenüber eingespeistem Licht ein Maß für eine auf die Lichtleitfaser wirkende Kraft aus einem Druckraum des Injektors ist, wobei für das zweite optische Signal Licht aus der Lichtleitfaser in Abhängigkeit von einem Verformungsgrad der druckabhängig verformbaren Wirkfläche in die Lichtleitfaser rückgekoppelt wird, wobei die Intensität des rückgekoppelten Lichts als zweites optisches Signal ein Maß für einen die Wirkfläche verformenden Druck aus dem Druckraum ist.

Zweckmäßigerweise werden die beiden optischen Signale miteinander verknüpft. Eine Verfahrensvariante kann darin bestehen, dass die beiden optischen Signale miteinander verknüpft werden, um eines der beiden Signale anhand des jeweils anderen Signals zu plausibilisieren. Im stationären Injektorbetrieb, d.h. wenn sich der Injektor entweder in Offenstellung oder in Schließstellung befindet und mithin praktisch keine Aktor-Kräfte wirken, kann die ordnungsgemäße Funktion des einen optischen Signals mittels des anderen optischen Signals überprüft bzw. plausibilisiert werden, da in diesem Fall mit beiden optischen Signalen jeweils Druckwellen detektiert werden.

Eine bevorzugte Verfahrensvariante besteht darin, dass die beiden optischen Signale miteinander durch Korrelation verknüpft werden, um insbesondere das Öffnungs- und Schließverhalten einer Ventilnadel des Injektors, insbesondere deren Öffnungs- und Schließzeitpunkt zu bestimmen. Während der Öffnungs- und Schließphase des Injektors wirken zusätzlich zum Druck noch Aktor-Kräfte aufgrund von charakteristischen Schaltvorgängen durch bewegliche Komponenten insbesondere der Ventilnadel. Mittels des aufgrund des Faser-Bragg-Gitter-Prinzips generierten optischen Signals sind derartige Aktor-Kräfte erfassbar. Indem die beiden unterschiedlichen optischen Signale miteinander zeitlich korreliert werden, wird eine Bestimmung des Öffnungs- und Schließverhaltens des Injektors auch und gerade dann ermöglicht, wenn Druckschwingungen auftreten, die beispielsweise von periodischen Druckpulsationen einer Pumpe herrühren, im Injektor mehrfach reflektiert werden und dadurch zu Überlagerungseffekten führen, welche in der Regel verhindern, dass der Kraftverlauf bei Schaltvorgängen lediglich durch eine simple Analyse von Drucksignalen ableitbar ist.

Zum Bilden einer Korrelation werden die beiden optischen Signale jeweils in elektrische Messwerte umgewandelt, wobei für ein jeweiliges Messzeitintervall die jeweilige Differenz zwischen den Messwerten des ersten optischen Signals und den dazu zeitlich koinzidenten Messwerten des zweiten optischen Signals ermittelt wird.

### Zeichnungen

Ein Ausführungsbeispiel der Erfindung ist in der nachfolgenden Beschreibung und in den beigefügten Zeichnungen näher erläutert. Letztere zeigen in schematisch gehaltenen Ansichten:
Fig. 1 einen Längsschnitt durch eine erfindungsgemäße Vorrichtung, welche einen Injektor und eine in einer Sacklochbohrung des Injektors angeordnete Lichtleitfaser aufweist,
Fig. 2 einen vergrößerten Ausschnitt der Vorrichtung von Fig. 1 gemäß einem gestrichelt dargestellten Kreis I im Bereich der Sacklochbohrung mit der darin verankerten Lichtleitfaser,
Fig. 3 ein Spektrum der von einer Lichtquelle emittierten und in die Lichtleitfaser eingekoppelten Strahlung, wobei die Intensität der Strahlung gegenüber der Wellenlänge aufgetragen ist,
Fig. 4 einen Spektralverlauf der aus der Lichtleitfaser zurückkommenden Strahlung im Vergleich zur eingespeisten Strahlung, wobei die Intensität der Strahlung gegenüber der Wellenlänge aufgetragen ist,
Fig. 5 ein Diagramm mit zwei anhand von Modellrechnungen erstellten theoretischen Kurven während der Vor- und der nachfolgenden Haupteinspritzung in einem Injektor, wobei die untere Kurve eine Durchflussrate von durch den Injektor eines Einspritzsystems durchströmendem Kraftstoff und die obere Kurve den korrespondierend dazu auf den Injektorkörper wirkenden Kraftverlauf in Abhängigkeit von der Zeit wiedergibt,
Fig. 6 ein Diagramm analog Fig. 5 mit zwei anhand von Modellrechnungen erstellten theoretischen Kurven, wobei die untere Kurve die Durchflussrate des durch den Injektor durchströmenden Kraftstoffs wiedergibt, während die obere Kurve den korrespondierend dazu im Innern des Injektorkörpers wirkenden Druckverlauf darstellt, und
Fig. 7 ein Diagramm mit zwei anhand von Modellrechnungen erstellten Kurven während der Vor- und Haupteinspritzung, wobei die erste Kurve die Durchflussrate des durch den Injektor durchströmenden Kraftstoffs wiedergibt, während die zweite Kurve aus der Differenz des Kraftverlaufs von Fig. 5 und des Druckverlaufs von Fig. 6 gebildet ist.

### Beschreibung des Ausführungsbeispiels

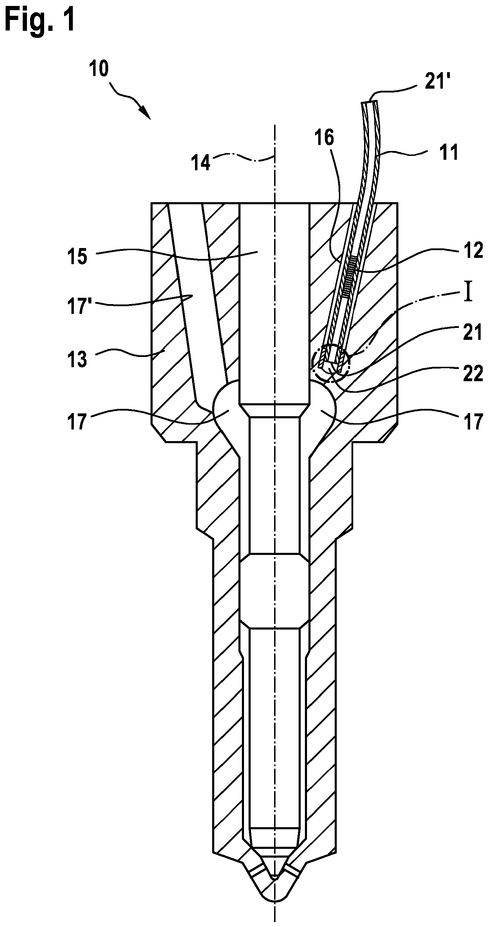

Fig. 1 veranschaulicht in einer Längsschnittansicht die im Ganzen mit 10 bezeichnete erfindungsgemäße Vorrichtung, welche eine Lichtleitfaser 11 mit darin eingeschriebenem Faser-Bragg-Gitter 12 sowie einen Injektor 13 aufweist. In dem Injektor 13, der bevorzugt als Common-Rail-Injektor ausgebildet ist, ist entlang der Injektorlängsmittelachse 14 eine Düsennadel 15 im Wesentlichen axialverschieblich aufgenommen, welche einen Druckraum 17 durchgreift, in den ein schräg zur Längsmittelachse verlaufender Druckkanal 17' zur Zufuhr von Kraftstoff einmündet. Um die Kraft- und Druckverhältnisse im Injektor 13 und insbesondere das Öffnungs- und Schließverhalten der Düsennadel 15 zu erfassen, ist die Lichtleitfaser 11 zusammen mit dem Faser-Bragg-Gitter 12 in eine Sacklochbohrung 16 des Injektors 11 eingeführt, die sich von der Gehäuseaußenseite des Injektors 13 erstreckt und in der Nähe des Druckraums 17 des Injektors 13 endet. Der in die Sacklochbohrung 16 eingeführte Abschnitt der Lichtleitfaser 11 ist in der Sacklochbohrung 16 festgeklebt, wobei sich die Klebung im Wesentlichen über die Länge der Sacklochbohrung 16 erstreckt. Der Lichtleitfaser 11 ist eine - nicht dargestellte - Lichtquelle und ein - nicht dargestellter - Photodetektor zugeordnet. Sowohl die Lichtquelle als auch der Photodetektor sind am aus der Sacklochbohrung 16 des Injektors 13 herausragenden Ende der Lichtleitfaser 11 angeordnet. Von der Lichtquelle in das aus der Sacklochbohrung herausragende Ende der Lichtleitfaser 11 eingekoppeltes Licht durchläuft die Lichtleitfaser 11, wobei ein Teil des Lichts an dem Faser-Bragg-Gitter 12 unter der Bragg-Wellenlänge reflektiert und als zurücklaufende Lichtwelle von dem Photodetektor erfasst wird, während einer anderer Teil des eingespeisten Lichts die Lichtleitfaser 11 durchläuft, am anderen Ende 21 der Lichtleitfaser austritt und auf den Boden der Sacklochbohrung 16 auftrifft, welcher als unter Druck elastisch verformbare Wirkfläche bzw. Reflektorfläche ausgebildet ist, dessen optisches Abbildungsverhalten abhängig vom einwirkenden Druck ist und bestimmt, welcher Anteil der reflektierten Lichtstrahlen zurück in die Lichtleitfaser 11 gelangt.

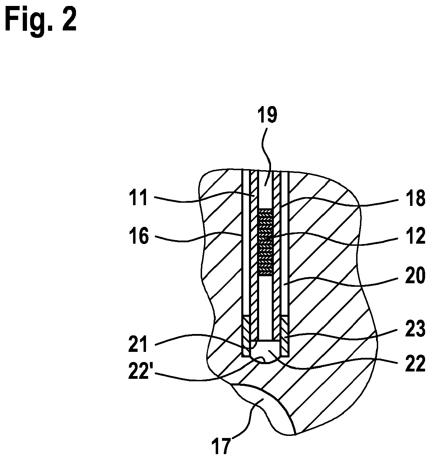

Fig. 2 veranschaulicht die Vorrichtung 10 in einem vergrößertem Ausschnitt im Bereich der Sacklochbohrung 16. Die Lichtleitfaser 11 weist einen Außenmantel 18 und einen vom Außenmantel umfassten Faserkern 19 auf, wobei in dem Faserkern 18 das Faser-Bragg-Gitter 12 angeordnet ist. Der Außenmantel 18 und der Faserkern 19 der Lichtleitfaser 11 weisen einen unterschiedlichen Brechungsindex auf. Die Lichtleitfaser 11 mit dem Faser-Bragg-Gitter 12 ist so in der Sacklochbohrung 16 des Injektors 13 positioniert und durch Klebung 20 flächig verankert, dass sich zwischen dem in die Sacklochbohrung 16 hineinragenden Ende 21 der Lichtleitfaser 11 und dem Boden 22' der Sacklochbohrung 16 ein Hohlraum 22 ausbildet. Zum genauen Positionieren beim Einführen des Lichtleitfaser 11 in die Sacklochbohrung 16 dient vorzugsweise eine ringförmig ausgebildete Hülse 23. Der Außendurchmesser der Hülse 23 entspricht etwa dem Innendurchmesser der Sacklochbohrung 16, während der Innendurchmesser etwa dem Außendurchmesser der Lichtleitfaser 11 entspricht. Das Ende 21 der Lichtleitfaser 11 wird in die Hülse 23 eingeschoben und fixiert; die Hülse 23 und die daran mit ihrem Ende 21 fixierte Lichtleitfaser 11 wird in die Sacklochbohrung 16 eingeführt, bis die Hülse 23 am Boden 22' der Sacklochbohrung 16 in Anschlag gestellt ist. Da das Ende 21 der Lichtleitfaser 11 die Hülse 23 nicht vollständig durchgreift, sondern nur bis etwa zur Hälfte der Axialerstreckung der Hülse 23 in diese eintaucht, wird dadurch ein vorbestimmter Abstand zwischen dem Ende 21 der Lichtleitfaser 11 und dem Boden 22' der Sacklochbohrung 16 ausgebildet. In dieser Stellung der Lichtleitfaser 11 wird zwischen dem Außenmantel 18 und der Wandung der Sacklochbohrung 16 großflächig die Klebung 20 ausgebildet, um die Lichtleitfaser 11 zusammen mit dem Faser-Bragg-Gitter 12 darin zu verankern. Aufgrund dieser Verankerung erfährt die Lichtleitfaser 11 eine Dehnung bzw. Längenänderung, wenn auf den Injektorkörper und mithin auf die Lichtleitfaser Kräfte einwirken. Da eine Dehnung bzw. Längenänderung der Lichtleitfaser 11 auch den Bereich des Faser-Bragg-Gitters 12 erfasst, führt eine derartige Längenänderung zu einer Verschiebung der Bragg-Wellenlänge λ_{B}, so dass die Wellenlängenverschiebung abhängig von der entsprechend einwirkenden Kraft ist. Eine solche Wellenlängenverschiebung wird erfasst, indem Licht in das aus der Sacklochbohrung 16 herausragenden Ende 21' der Lichtleitfaser 11 eingekoppelt und der dann am Faser-Bragg-Gitter 12 unter der Bragg-Wellenlänge λ_{B} zurückreflektierte Teil des Lichts mittels eines Photodetektors und eines vorgeschalteten Bandpassfilters oder Monochromators wellenlängenselektiv erfasst wird. Der restliche Teil des Lichts läuft durch das Faser-Bragg-Gitter 12 durch und wird am anderen Ende 21 der Lichtleitfaser 11 in den Hohlraum 22 ausgekoppelt. Dort wird das Licht am Boden 22' des Hohlraums 22, der als Reflektorraum fungiert, reflektiert. Der Boden 22', welcher gekrümmt bzw. gewölbt, vorzugsweise konkav, ausgebildet ist, wirkt als drucksensitives Membran, denn die Krümmung bzw. Wölbung verändert bzw. verformt sich in Abhängigkeit vom im Injektorkörper wirkenden Druck. Dadurch ändern sich die optischen Abbildungseigenschaften der Membran 22' in Abhängigkeit vom auf die Membran wirkenden und diese verformenden Druck, der vom Druckraum 17 ausgeht. Beispielsweise kann die konkave Krümmung der Membran 22' so ausgebildet und der Abstand zwischen der Membran und dem Ende 21 der Lichtleitfaser 11, d.h. die axiale Erstreckung des Reflektorraums 22, so eingestellt sein, dass die fokale Ebene der Membran 22' im unverformten Zustand etwa auf dem Ende 21 der Lichtleitfaser 11 liegt, so dass sich in diesem Zustand eine hohe optische Rückkopplung ergibt, die sich jedoch ändert, wenn sich die Membran 22' unter einwirkendem Druck verformt. Die vom Boden 22' zurückreflektierten Lichtstrahlen werden je nach Verformungsgrad des Bodens 22' nicht vollständig in das Faserende 21 zurückgekoppelt, sondern werden teilweise z.B. zum Rand der Hülse 23 abgelenkt, wo sie absorbiert werden. Der vom Boden 22' aus in das Faserende 21 zurückgekoppelte Anteil der Lichtstrahlen läuft jedoch durch die Lichtleitfaser 11 durch, tritt am gegenüberliegenden Ende 21' aus und wird dort - zusätzlich zum Wellenlängenverschiebungssignal - als weiteres optisches Signal detektiert, dessen Intensität ein Maß für den vom als Membran dienenden Boden 22' aufgenommenen Druck ist. Mithin stehen detektorseitig zwei unterschiedliche optische Signale an, die selektiv erfasst und verarbeitet bzw. ausgewertet werden. Dabei handelt es sich bei dem ersten optischen Signal um ein wellenlängenkodiertes Signal, während das zweite optische Signal ein Amplitudensignal darstellt. Hinsichtlich des zweiten optischen Signals übersetzt das sich aus dem optischen Zusammenwirken des Bodens 22' mit dem Ende 21 der Lichtleitfaser 11 ergebende Abbildungssystem einen mechanischen Verformungsgrad des Bodens bzw. der Wirkfläche 22' in einen optischen Rückkopplungsgrad, der durch den Quotienten aus dem Anteil solcher Lichtstrahlen, welche die Wirkfläche 22' auf das Ende 21 der Lichtleitfaser 11 projiziert, und dem übrigen Anteil der Lichtstrahlen, welche neben dem Ende 21 der Lichtleitfaser 11, also beispielsweise am Hülsenrand auftreffen, definiert ist. Dieser Quotient ist somit im Wesentlichen eine Funktion des jeweiligen Verformungsgrads der Wirkfläche bzw. des Bodens 22'. Die optische Achse dieses Abbildungssystems fällt mit der Längsachse der Sacklochbohrung 16 zusammen.

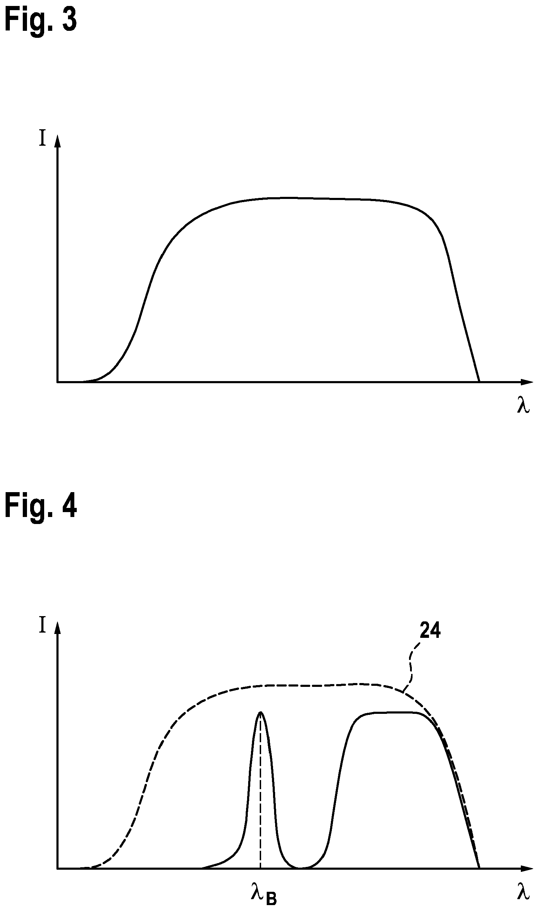

In Fig. 3 ist ein typisches Spektrum der von der Lichtquelle des Sensors emittierten breitbandigen Strahlung dargestellt. Dabei ist die Intensität I der Strahlung in Abhängigkeit von der Wellenlänge λ aufgetragen. Die Lichtquelle ist als breitbandige Lichtquelle ausgebildet und so am aus der Sacklochbohrung des Injektors 13 herausragenden Ende 21' der Lichtleitfaser 11 angeordnet, dass die von ihr vorzugsweise im sichtbaren Wellenlängenbereich emittierte Strahlung in das Ende 21' der Lichtleitfaser 11 eingekoppelt wird.

Fig. 4 zeigt den Spektralverlauf der aus der Lichtleitfaser 11 zurückkommenden Strahlung, die am Ende 21' der Lichtleitfaser 11 austritt und von einem - nicht dargestellten - Photodetektor erfasst wird, der - wie die Lichtquelle - am aus der Sacklochbohrung 16 des Injektors 13 herausragenden Ende 21' der Lichtleitfaser 11 angeordnet ist. Dem Photodetektor ist ein Monochromator vorgeordnet, welcher das aus der Lichtleitfaser 11 austretende bzw. ausgekoppelte Licht wellenlängenselektiv analysiert. Die Lichtquelle und der Monochromator mit nachgeordnetem Photodetektor stehen vorzugsweise über einen optischen Koppler (nicht dargestellt) mit dem Ende 21' der Lichtleitfaser 11 in optischer Wirkverbindung. Das typische Spektrum des aus der Lichtleitfaser 11 ausgekoppelten Lichts zeigt eine relativ schmale Bande bei der Bragg-Wellenlänge λ_{B} und eine breitere Bande bei höheren Wellenlängen, wobei die schmale Bande bei λ_{B} das mit der Dehnung bzw. Längenänderung des Faser-Bragg-Gitters korrespondierende erste optische Signal repräsentiert, während die langwelligere breite Bande als zweites optisches Signal mit der Reflexion am als druckaufnehmende Wirkfläche dienenden Boden 22' korrespondiert. Zum Vergleich dazu ist das von der Lichtquelle abgestrahlte und in die Lichtleitfaser 11 eingekoppelte bzw. eingestrahlte Emissionsspektrum 24 von Fig. 3 gestrichelt eingezeichnet.

Dem Photodetektor ist eine Auswerteelektronikeinheit nachgeschaltet, die dazu dient, die ausgangsseitig vom Photodetektor sowohl für das erste optische Signal als auch für das zweite optische Signal gelieferten analogen elektrischen Ausgangssignale zu puffern bzw. zu verstärken und dann in digitale Messdaten umzusetzen. Dabei wird das wellenlängenkodierte erste optische Signal je nach Art des verwendeten Monochromators und des/der verwendeten Photodetektors/Photodetektoren in dem Fachmann an sich bekannter Weise in entsprechende Messwerte umgewandelt. Die Trennung der beiden optischen Signale erfolgt durch den Monochromator. Dabei wird das zweite optische Signal, das sich in der breiten Absorptionsbande manifestiert, ausgewertet, indem zur Gewinnung einer Intensität z.B. die Absorptionsbande über den Wellenlängenbereich, über den sich die Absorptionsbande erstreckt, aufintegriert wird. Eine der Auswerteelektronikeinheit nachgeschaltete Prozessrecheneinheit verarbeitet die digitalen Daten laufend und in Echtzeit, um für jede Messreihe, also z.B. für ein Messzeitintervall, einen jeweiligen Datensatz für jedes der beiden optischen Signale anzulegen; für die Korrelation werden zunächst die Daten eines jeweiligen Datensatzes normiert, worauf anschließend für die laufende Messreihe eine Differenzbildung zwischen den beiden Datensätzen erfolgt. Dazu wird gemäß einem Ausführungsbeispiel in dem laufenden Messzeitintervall [t₀, tₙ], welches sich z.B. über die Voreinspritzung und die nachfolgende Haupteinspritzung erstreckt, von der Intervalluntergrenze t₀ bis zur Intervallobergrenze tₙ für jeden Zeitpunkt tᵢ (Laufindex i = 1 ... n) innerhalb des Intervalls die Differenz zwischen dem dem jeweiligen Zeitpunkt tᵢ zugeordneten Messwert eines Datensatzes und dem entsprechend zeitlich koinzidenten Messwert des anderen Datensatzes gebildet, so dass die Korrelation durch Differenzbildung bei Erreichen der Intervallobergrenze einer laufenden Messreihe bzw. eines Messzeitintervalls abgeschlossen wird, worauf sich zyklisch eine neue Messreihe unmittelbar anschließt.

Ein abgewandeltes Ausführungsbeispiel (nicht dargestellt) kann darin bestehen, dass ein zur Auskopplung von Licht zu dem wenigstens einen Photodetektor vorgesehenes Ende der Lichtleitfaser eine Jod-Beschichtung aufweist. Da Jod (I₂) für Licht im Spektralbereich um 540 nm ± 10 nm charakteristische Absorptionsbanden mit steil verlaufenden Absorptionsflanken aufweist, erfährt Licht, das wegen der Reflexion am gedehnten Faser-Bragg-Gitter der Lichtleitfaser mit einer verschobenen Wellenlänge am Ende der Lichtleitfaser ankommt, eine andere Absorption bzw. Abschwächung als Licht mit unverschobener Wellenlänge. Bei bekannter Flankensteilheit des charakteristischen I₂-Absorptionsverlaufs im Spektralbereich um 540 nm ± 10 nm, sind somit anhand von am Photodetektor gemessenen elektrischen Signalintensitäten die jeweils zugeordneten Wellenlängenverschiebungen des optischen Signals eindeutig bestimmbar, indem in einem Speicher der Prozessrecheneinheit eine Datenbank bzw. Wertetabelle abgelegt ist, in welcher der für Jod charakteristische Absorptionsverlauf in funktionaler Abhängigkeit von der Wellenlänge, d.h. in Form von entsprechenden Wertepaaren, abrufbar abgespeichert ist. Anstelle eines Monochromators erfüllt somit die Jod-Beschichtung die Funktion der Spektralanalyse des zu detektierenden Lichts in diesem speziellen Wellenlängenbereich.

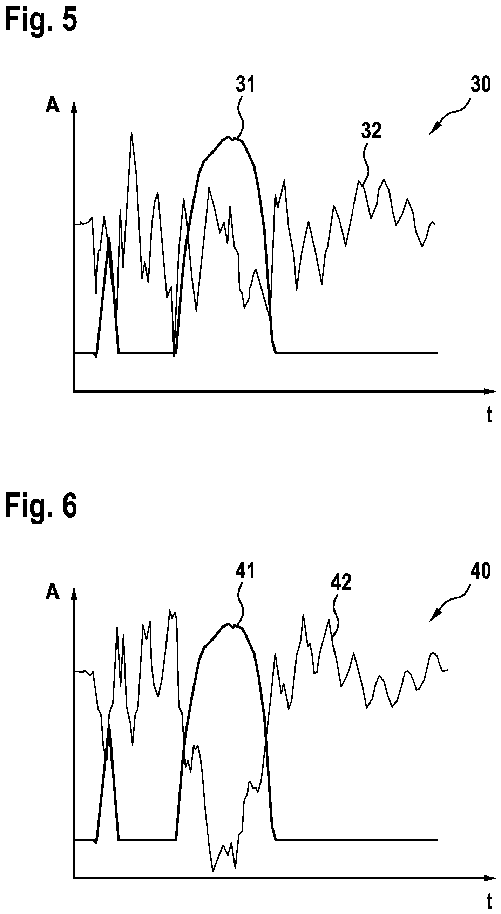

In Fig. 5 bis 7 sind als theoretische Basis für den Sensor der erfindungsgemäßen Vorrichtung 10 und dessen Funktionsprinzip Resultate von theoretischen Modellrechnungen für in Common-Rail-Injektoren auftretende Kraft- und Druckverhältnisse dargestellt, die während des Vor- und des nachfolgenden Haupteinspritzvorgangs beim jeweiligen Öffnen und Schließen der Ventilnadel rechnerisch auftreten können, wobei den Modellrechnungen typische Werte für den Raildruck und die Injektordimensionen einschließlich der im Injektorkörper bestehenden Strömungsquerschnitte für den durchströmenden Kraftstoff zugrundegelegt sind.

Fig. 5 zeigt ein Diagramm 30 mit zwei Kurven 31 und 32, die anhand von Modellrechnungen während des Vor- und des zeitlich nachfolgenden Haupteinspritzvorgangs in einem Injektor erstellt sind, wobei die untere Kurve 31 die Durchflussrate von Kraftstoff wiedergibt, der durch den Injektor während des Vor- und des Haupteinspritzvorgangs durchströmt, während die obere Kurve 32 den dabei auf den Injektorkörper wirkenden Kraftverlauf wiedergibt. Auf der Abszisse des Diagramms 30 ist die Zeitachse t aufgetragen, während die Ordinate die Amplitude A der Durchflussrate bzw. der Kraft darstellt. Da die den Kraftverlauf wiedergebende Kurve 32 starke Fluktuationen in der Amplitude aufweist, ist aus dem Kurvenverlauf kein eindeutiger Zusammenhang mit den aus der Durchflusskurve 31 deutlich ersichtlichen Öffnungs- und Schließzeitpunkten der Ventilnadel ableitbar.

Fig. 6 zeigt ein Diagramm 40 mit zwei Kurven 41 und 42, die anhand von Modellrechnungen während des Vor- und des zeitlich nachfolgenden Haupteinspritzvorgangs in einem Injektor erstellt sind, wobei die untere Kurve 41 - wie in Fig. 5 - die Durchflussrate von Kraftstoff wiedergibt, der den Injektor während des Vor- und des Haupteinspritzvorgangs durchströmt, während die obere Kurve 42 - im Unterschied zu Fig. 5 - den dabei auf den Injektorkörper wirkenden Druckverlauf wiedergibt. Auf der Abszisse ist des Diagramms 40 ist die Zeitachse t aufgetragen, während die Ordinate die Amplitude A der Durchflussrate bzw. des Drucks darstellt. Während aus dem Durchflussverlauf 41 anhand der steilen Anstiegs- und Abfallflanken der jeweilige Öffnungs- und Schließzeitpunkt der Ventilnadel deutlich erkennbar ist, ist hingegen im Druckverlauf 42 aufgrund starker Fluktuationen in der Amplitude kein eindeutiger Zusammenhang mit den Öffnungs- und Schließzeitpunkten der Ventilnadel herstellbar. Derartige Fluktuationen können beispielsweise von Druckpulsationen einer Common-Rail-Pumpe herrühren, wobei Reflektionen der Druckwellen im Injektorkörper zu Überlagerungseffekten führen können.

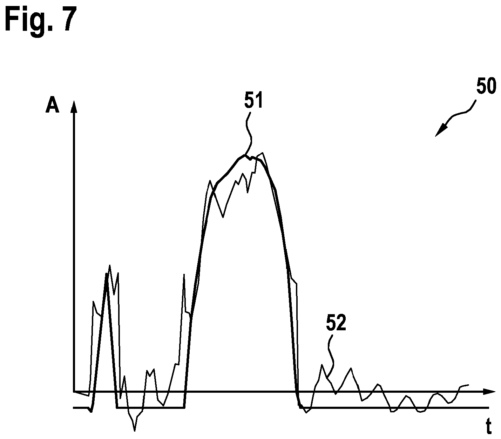

Fig. 7 zeigt ein Diagramm 50 mit zwei Kurven 51 und 52, die anhand von Modellrechnungen während des Vor- und zeitlich nachfolgenden Haupteinspritzvorgangs in dem Injektor erstellt sind, wobei die erste Kurve 51 - wie in Fig. 5 und 6 - die Durchflussrate des durch den Injektor durchströmenden Kraftstoffs wiedergibt, während die zweite Kurve 52 aus der Differenz des Kraftverlaufs von Fig. 5 und des Druckverlaufs von Fig. 6 gebildet ist. Aus dieser resultierenden Kurve 52, die durch Differenzbildung der miteinander in zeitlicher Korrelation stehenden Funktionsverläufe 32 und 42 erzeugt ist, sind trotz starker Fluktuationen in der Amplitude eindeutig die jeweiligen Öffnungs- und Schließzeitpunkte t1 und t2 der Ventilnadel während der Vor- und Haupteinspritzung ermittelbar. Damit ist verdeutlicht, dass erst durch die Erfassung sowohl der Kraft als auch des Drucks im Injektorkörper und durch die Bildung einer Korrelation zwischen beiden physikalischen Größen der jeweilige Öffnungs- und Schließzeitpunkt t1, t2 der Ventilnadel innerhalb eines für die Anwendung ausreichenden Toleranzbereichs exakt ermittelbar ist, wobei der Toleranzbereich in Fig. 7 qualitativ anhand der Bezugsziffer 53 gekennzeichnet ist. Diese quantitativ durchgeführten Modellrechnungen bilden mithin eine Basis für das Funktionsprinzip des Sensors der erfindungsgemäßen Vorrichtung, der zwei unterschiedliche optische Signale für die Ermittlung des Öffnungs- und Schließverhaltens der Ventilnadel eines Injektors bereitstellt.

Zusammenfassend ist erfindungsgemäß vorgesehen, dass die Vorrichtung einen Injektor mit einer einen Druckraum durchgreifenden Ventilnadel und einen Sensor umfasst, welcher eine Lichtleitfaser 11 mit einem Faser-Bragg-Gitter 12 aufweist, wobei die Lichtleitfaser 11 in dem Injektor 13 verankert angeordnet ist, um bei Einspeisung von Licht aus einer Lichtquelle in die Lichtleitfaser 11 ein erstes optisches Signal zu bilden, das als Wellenlängenänderung von am Faser-Bragg-Gitter 12 reflektiertem Licht gegenüber dem eingespeisten Licht ein Maß für eine auf die Lichtleitfaser 11 wirkende Kraft aus dem Druckraum 17 ist, wobei eine druckabhängig verformbare Wirkfläche 22' im Injektor 13 ausgebildet ist, um Licht aus der Lichtleitfaser 11 in Abhängigkeit vom Verformungsgrad der Wirkfläche 22' in die Lichtleitfaser 11 rückzukoppeln, wobei die Intensität des rückgekoppelten Lichts als zweites optisches Signal ein Maß für einen die Wirkfläche 22' verformenden Druck aus dem Druckraum 17 ist, wobei Auswertemittel zur Erfassung der Signale dienen, um aus deren Korrelation das Öffnungs- und Schließverhalten der Ventilnadel 15 zu ermitteln. Dadurch ist eine zuverlässige Messung auch bei kleinen Einspritzmengen möglich. Aufgrund der gleichzeitigen Erfassung der zwei unterschiedlichen optischen Signale können potentiell im Injektor auftretende Druckschwingungen die Messzuverlässigkeit praktisch nicht beeinträchtigen. Das Verfahren zum Betreiben der erfindungsgemäßen Vorrichtung umfasst gemäß dem bevorzugten Ausführungsbeispiel im Wesentlichen die Schritte des Bildens eines ersten optischen Signals und eines zweiten optischen Signals, wobei das erste optische Signal als Wellenlängenänderung von am Faser-Bragg-Gitter 12 reflektiertem Licht gegenüber eingespeistem Licht ein Maß für eine auf die Lichtleitfaser 11 wirkende Kraft aus dem Druckraum 17 ist, wobei für das zweite optische Signal Licht aus der Lichtleitfaser 11 in Abhängigkeit von einem Verformungsgrad der druckabhängig verformbaren Wirkfläche 22' in die Lichtleitfaser 11 rückgekoppelt wird, wobei die Intensität des rückgekoppelten Lichts als zweites optisches Signal ein Maß für einen die Wirkfläche 22' verformenden Druck aus dem Druckraum 17 ist, sowie des Bildens einer Korrelation der beiden optischen Signale, um daraus das Öffnungs- und Schließverhalten der Ventilnadel zu ermitteln. Dabei werden zum Bilden einer Korrelation die beiden optischen Signale jeweils in elektrische Messwerte umgewandelt, wobei für ein jeweiliges Messzeitintervall die jeweilige Differenz zwischen den Messwerten des ersten optischen Signals und den dazu zeitlich koinzidenten Messwerten des zweiten optischen Signals ermittelt wird.

## Patentansprüche

1. Vorrichtung umfassend einen Injektor und einen optischen Sensor, der abhängig vom Druck und/oder kraftabhängig ein eingespeistes optisches Signal im Injektor (13) in mindestens einer seiner Eigenschaften ändert, **dadurch gekennzeichnet, dass** der optische Sensor eine Lichtleitfaser (11) mit einem Faser-Bragg-Gitter (12) aufweist, wobei die Lichtleitfaser (11) in dem Injektor (13) verankert angeordnet ist, um bei Einspeisung von Licht aus einer Lichtquelle in die Lichtleitfaser (11) ein erstes optisches Signal zu bilden, das als Wellenlängenänderung von am Faser-Bragg-Gitter (12) reflektiertem Licht gegenüber dem eingespeisten Licht ein Maß für eine auf die Lichtleitfaser (11) wirkende Kraft aus einem Druckraum (17) ist, wobei eine druckabhängig verformbare Wirkfläche (22') im Injektor (13) ausgebildet ist, um Licht aus der Lichtleitfaser (11) in Abhängigkeit vom Verformungsgrad der Wirkfläche (22') in die Lichtleitfaser (11) rückzukoppeln, wobei die Intensität des rückgekoppelten Lichts als zweites optisches Signal ein Maß für einen die Wirkfläche (22') verformenden Druck aus dem Druckraum (17) ist.

2. Vorrichtung nach Anspruch 1, **dadurch gekennzeichnet, dass** Auswertemittel vorgesehen sind, welche die beiden optischen Signale miteinander verknüpfen.

3. Vorrichtung nach Anspruch 1, **dadurch gekennzeichnet, dass** Auswertemittel vorgesehen sind, welche die beiden optischen Signale miteinander verknüpfen, um eines der beiden Signale anhand des jeweils anderen Signals zu plausibilisieren.

4. Vorrichtung nach Anspruch 1, **dadurch gekennzeichnet, dass** Auswertemittel vorgesehen sind, welche die beiden optischen Signale miteinander durch Korrelation verknüpfen, um insbesondere das Öffnungs- und Schließverhalten einer Ventilnadel des Injektors, insbesondere den Öffnungs- und Schließzeitpunkt zu bestimmen.

5. Vorrichtung nach einem der vorherigen Ansprüche, **dadurch gekennzeichnet, dass** die Lichtleitfaser (11) in einer Sacklochbohrung (16) des Injektors (13) verankert ist, wobei der Boden (22') der Sacklochbohrung (16) als Wirkfläche ausgebildet ist.

6. Vorrichtung nach einem der vorherigen Ansprüche, **dadurch gekennzeichnet, dass** die Wirkfläche (22") gekrümmt ausgebildet ist.

7. Vorrichtung nach Anspruch 6, **dadurch gekennzeichnet, dass** die Wirkfläche (22') konkav gekrümmt ist, wobei ihre fokale Ebene in unverformtem Zustand der Wirkfläche etwa auf dem der Wirkfläche (22') zugewandten Ende (21) der Lichtleitfaser (11) liegt.

8. Vorrichtung nach einem der vorherigen Ansprüche, **dadurch gekennzeichnet, dass** zwischen der Wirkfläche (22') und einem der Wirkfläche zugewandten Ende (21) der Lichtleitfaser (11) ein Zwischenraum ausgebildet ist, der als Reflektorraum für aus dem Ende (21) der Lichtleitfaser (11) austretendem Licht dient.

9. Vorrichtung nach einem der Ansprüche 5 bis 8, **dadurch gekennzeichnet, dass** die Sacklochbohrung (16) so in dem Injektor (13) verläuft, dass der als Wirkfläche dienende Boden (22') der Sacklochbohrung (16) an den Druckraum (17) des Injektors (13) angrenzt.

10. Vorrichtung nach einem der Ansprüche 5 bis 9, **dadurch gekennzeichnet, dass** ein hülsenförmiges Element (23) vorgesehen ist, welches ein dem Boden (22') zugewandtes Ende (21) der Lichtleitfaser (11) aufnimmt und welches in die Sacklochbohrung (16) einführbar ist, um einen vorbestimmten Abstand zwischen dem Ende (21) der Lichtleitfaser (11) und dem als Wirkfläche dienenden Boden (22') der Sacklochbohrung (16) einzustellen.

11. Vorrichtung nach Anspruch 10, **dadurch gekennzeichnet, dass** das hülsenförmige Element (23) aus lichtabsorbierendem Material gebildet ist.

12. Vorrichtung nach einem der vorherigen Ansprüche, **dadurch gekennzeichnet, dass** die Lichtquelle spektral breitbandiges Licht abstrahlt, das vorzugsweise im spektral sichtbaren Wellenlängenbereich zwischen etwa 350 nm bis etwa 680 nm liegt.

13. Vorrichtung nach einem der vorherigen Ansprüche, **dadurch gekennzeichnet, dass** wenigstens ein Photodetektor vorgesehen ist, um einerseits an dem Faser-Bragg-Gitter (12) reflektiertes Licht und andererseits von der Wirkfläche (22') in die Lichtleitfaser (11) rückgekoppeltes Licht zu erfassen.

14. Vorrichtung nach Anspruch 13, **dadurch gekennzeichnet, dass** dem Photodetektor wenigstens ein spektral selektives Element vorgeschaltet ist, um aus der Lichtleitfaser (11) ausgekoppeltes Licht wellenlängenabhängig aufzulösen.

15. Vorrichtung nach Anspruch 14, **dadurch gekennzeichnet, dass** das wenigstens eine spektral selektive Element als Monochromator ausgebildet ist.

16. Vorrichtung nach Anspruch 14, **dadurch gekennzeichnet, dass** ein zur Auskopplung von Licht zu dem wenigstens einen Photodetektor vorgesehenes Ende (21') der Lichtleitfaser (11) eine Jod-Beschichtung aufweist.

17. Vorrichtung nach Anspruch 14 oder 15, **dadurch gekennzeichnet, dass** die Lichtquelle und der wenigstens eine Photodetektor mit dem wenigstens einen vorgeschalteten spektral selektiven Element an einem der Wirkfläche (22') abgewandten Ende (21) der Lichtleitfaser (11) angeordnet sind.

18. Vorrichtung nach einem der Ansprüche 13 bis 17, **dadurch gekennzeichnet, dass** die Auswertemittel eine Prozessrecheneinheit umfassen, welche dem Photodetektor nachgeschaltet ist.

19. Vorrichtung nach Anspruch 18, **dadurch gekennzeichnet, dass** die Auswertemittel eine Auswerteelektronikeinheit umfassen, welche als Schnittstelle zwischen dem Photodetektor und der Prozessrecheneinheit dient.

20. Kraftstoffeinspritzsystem umfassend wenigstens eine Vorrichtung nach einem der Ansprüche 1 bis 19.

21. Verfahren zum Betreiben der Vorrichtung nach einem der Ansprüche 1 bis 19, wobei Licht mit wenigstens einer vorbekannten Eigenschaft in den Injektor eingespeist wird und in zurückgeführtem Licht eine Änderung in der Eigenschaft erfasst wird, **dadurch gekennzeichnet, dass** ein erstes optisches Signal und ein zweites optisches Signal gebildet werden, wobei das erste optische Signal als Wellenlängenänderung von am Faser-Bragg-Gitter reflektiertem Licht gegenüber eingespeistem Licht ein Maß für eine auf die Lichtleitfaser wirkende Kraft aus einem Druckraum eines Injektors ist, wobei für das zweite optische Signal Licht aus der Lichtleitfaser in Abhängigkeit von einem Verformungsgrad einer druckabhängig verformbaren Wirkfläche in die Lichtleitfaser rückgekoppelt wird, wobei die Intensität des rückgekoppelten Lichts als zweites optisches Signal ein Maß für einen die Wirkfläche verformenden Druck aus dem Druckraum ist.

22. Verfahren nach Anspruch 21, **dadurch gekennzeichnet, dass** die beiden optischen Signale miteinander verknüpft werden.

23. Verfahren nach Anspruch 21, **dadurch gekennzeichnet, dass** die beiden optischen Signale miteinander verknüpft werden, um eines der beiden Signale anhand des jeweils anderen Signals zu plausibilisieren.

24. Verfahren nach Anspruch 21, **dadurch gekennzeichnet, dass** die beiden optischen Signale miteinander durch Korrelation verknüpft werden, um insbesondere das Öffnungs- und Schließverhalten einer Ventilnadel des Injektors, insbesondere deren Öffnungs- und Schließzeitpunkt zu bestimmen.

25. Verfahren nach Anspruch 24, **dadurch gekennzeichnet, dass** zum Bilden einer Korrelation die beiden optischen Signale jeweils in elektrische Messwerte umgewandelt werden, wobei für ein jeweiliges Messzeitintervall die jeweilige Differenz zwischen den Messwerten des ersten optischen Signals und den dazu zeitlich koinzidenten Messwerten des zweiten optischen Signals ermittelt wird.

## Claims

1. Apparatus comprising an injector and an optical sensor changing a supplied optical signal in the injector (13) in terms of at least one of its properties in dependence on the pressure and/or force, **characterized in that** the optical sensor has an optical fibre (11) with a fibre Bragg grating (12), wherein the optical fibre (11) is arranged anchored in the injector (13) in order to produce a first optical signal when light is supplied from a light source into the optical fibre (11), with the first optical signal, as a wavelength change of light reflected at the fibre Bragg grating (12) compared with the supplied light, being a measure of a force from a pressure chamber (17) acting on the optical fibre (11), wherein an effective surface (22') that is deformable in a pressure-dependent manner is formed in the injector (13) in order to feed light from the optical fibre (11) back into the optical fibre (11) in dependence on the degree of deformation of the effective surface (22'), wherein the intensity of the fed-back light, as a second optical signal, is a measure of a pressure from the pressure chamber (17) deforming the effective surface (22').

2. Apparatus according to Claim 1, **characterized in that** evaluation means are provided which link the two optical signals to each other.

3. Apparatus according to Claim 1, **characterized in that** evaluation means are provided which link the two optical signals to each other in order to check the plausibility of one of the two signals using the respective other signal.

4. Apparatus according to Claim 1, **characterized in that** evaluation means are provided which link the two optical signals to each other by correlation in order to determine in particular the opening and closing behaviour of a valve needle of the injector, in particular the opening and closing times.

5. Apparatus according to any of the preceding claims, **characterized in that** the optical fibre (11) is anchored in a blind hole (16) of the injector (13), wherein the bottom (22') of the blind hole (16) is embodied in the form of an effective surface.

6. Apparatus according to any of the preceding claims, **characterized in that** the effective surface (22") is curved.

7. Apparatus according to Claim 6, **characterized in that** the effective surface (22') is concavely curved, wherein the focal plane thereof in the non-deformed state of the effective surface lies approximately at the end (21) of the optical fibre (11) that is near the effective surface (22').

8. Apparatus according to any of the preceding claims, **characterized in that** an intermediate space serving as a reflector space for light emerging from an end (21) of the optical fibre (11) that is near the effective surface is formed between the effective surface (22') and the end (21) of the optical fibre (11) .

9. Apparatus according to any of Claims 5 to 8, **characterized in that** the blind hole (16) extends in the injector (13) such that the bottom (22') of the blind hole (16) serving as an effective surface adjoins the pressure chamber (17) of the injector (13) .

10. Apparatus according to any of Claims 5 to 9, **characterized in that** a sleeve-type element (23) is provided, which receives an end (21) of the optical fibre (11) that is near the bottom (22') and which is insertable into the blind hole (16), in order to set a predetermined distance between the end (21) of the optical fibre (11) and the bottom (22') of the blind hole (16) serving as an effective surface.

11. Apparatus according to Claim 10, **characterized in that** the sleeve-type element (23) is formed from light-absorbing material.

12. Apparatus according to any of the preceding claims, **characterized in that** the light source emits spectrally broadband light which preferably lies in the spectrally visible wavelength range between approximately 350 nm and approximately 680 nm.

13. Apparatus according to any of the preceding claims, **characterized in that** at least one photodetector is provided in order to pick up light that has been reflected at the fibre Bragg grating (12) and also light that has been fed back from the effective surface (22') into the optical fibre (11).

14. Apparatus according to Claim 13, **characterized in that** at least one spectrally selective element is connected upstream of the photodetector in order to resolve light coupled out of the optical fibre (11) in a wavelength-dependent manner.

15. Apparatus according to Claim 14, **characterized in that** the at least one spectrally selective element is embodied in the form of a monochromator.

16. Apparatus according to Claim 14, **characterized in that** an end (21') of the optical fibre (11) that is provided for coupling light out to the at least one photodetector has an iodine coating.

17. Apparatus according to Claim 14 or 15, **characterized in that** the light source and the at least one photodetector are arranged with the at least one upstream spectrally selective element on an end (21) of the optical fibre (11) that is distant from the effective surface (22').

18. Apparatus according to any of Claims 13 to 17, **characterized in that** the evaluation means comprise a process computational unit which is connected downstream of the photodetector.

19. Apparatus according to Claim 18, **characterized in that** the evaluation means comprise an evaluation electronics unit serving as an interface between the photodetector and the process computational unit.

20. Fuel injection system comprising at least one apparatus according to any of Claims 1 to 19.

21. Method for operating the apparatus according to any of Claims 1 to 19, wherein light having at least one previously known property is supplied to the injector and a change in the property is detected in fed-back light, **characterized in that** a first optical signal and a second optical signal are produced, wherein the first optical signal, as a wavelength change of light reflected at the fibre Bragg grating compared with supplied light, is a measure of a force from a pressure chamber of an injector acting on the optical fibre, wherein, for the second optical signal, light from the optical fibre is fed back into the optical fibre in dependence on a degree of deformation of an effective surface that is deformable in a pressure-dependent manner, wherein the intensity of the fed-back light, as a second optical signal, is a measure of a pressure from the pressure chamber deforming the effective surface.

22. Method according to Claim 21, **characterized in that** the two optical signals are linked to each other.

23. Method according to Claim 21, **characterized in that** the two optical signals are linked to each other in order to check the plausibility of one of the two signals using the respective other signal.

24. Method according to Claim 21, **characterized in that** the two optical signals are linked to each other by correlation in order to determine in particular the opening and closing behaviour of a valve needle of the injector, in particular its opening and closing times.

25. Method according to Claim 24, **characterized in that** the two optical signals are each converted into electrical measurement values to form a correlation, wherein the respective difference between the measurement values of the first optical signal and the measurement values of the second optical signal, which are temporally coincident with the former, for a respective measurement time interval is ascertained.

## Revendications

1. Dispositif comprenant un injecteur et un capteur optique, lequel modifie un signal optique injecté dans l'injecteur (13) en fonction de la pression et/ou en fonction de la force dans au moins l'une de ses propriétés, **caractérisé en ce que** le capteur optique possède une fibre optique (11) avec une fibre à réseau de Bragg (12), la fibre optique (11) étant disposée ancrée dans l'injecteur (13) afin de former, lors de l'injection de lumière provenant d'une source de lumière dans la fibre optique (11), un premier signal optique qui, en tant que modification de la longueur d'onde de la lumière réfléchie au niveau de la fibre à réseau de Bragg (12) par rapport à la lumière injectée, est une mesure d'une force agissant sur la fibre optique (11) depuis un espace de pression (17), une surface active (22') déformable en fonction de la pression étant réalisée dans l'injecteur (13) afin de renvoyer dans la fibre optique (11) la lumière provenant de la fibre optique (11) en fonction du taux de déformation de la surface active (22'), l'intensité de la lumière renvoyée, en tant que deuxième signal optique, étant une mesure pour une pression issue de l'espace de pression (17) déformant la surface active (22').

2. Dispositif selon la revendication 1, **caractérisé en ce que** des moyens d'interprétation sont prévus, lesquels associent ensemble les deux signaux optiques.

3. Dispositif selon la revendication 1, **caractérisé en ce que** des moyens d'interprétation sont prévus, lesquels associent ensemble les deux signaux optiques afin de garantir la plausibilité de l'un des deux signaux à l'aide de l'autre signal respectif.

4. Dispositif selon la revendication 1, **caractérisé en ce que** des moyens d'interprétation sont prévus, lesquels associent ensemble les deux signaux optiques par corrélation afin de déterminer notamment le comportement d'ouverture et de fermeture d'un pointeau de vanne de l'injecteur, notamment l'instant d'ouverture et de fermeture.

5. Dispositif selon l'une des revendications précédentes, **caractérisé en ce que** la fibre optique (11) est ancrée dans un alésage en trou borgne (16) de l'injecteur (13), le fond (22') de l'alésage en trou borgne (16) étant réalisé sous la forme d'une surface active.

6. Dispositif selon l'une des revendications précédentes, **caractérisé en ce que** la surface active (22') est de configuration courbe.

7. Dispositif selon la revendication 6, **caractérisé en ce que** la surface active (22') est de courbure concave, son plan focal à l'état non déformé de la surface active se trouvant approximativement à l'extrémité (21) de la fibre optique (11) qui fait face à la surface active (22').

8. Dispositif selon l'une des revendications précédentes, **caractérisé en ce qu'**un espace intermédiaire est formé entre la surface active (22') et une extrémité (21) de la fibre optique (11) qui fait face à la surface active, lequel sert d'espace réflecteur pour la lumière sortant de l'extrémité (21) de la fibre optique (11).

9. Dispositif selon l'une des revendications 5 à 8, **caractérisé en ce que** l'alésage en trou borgne (16) suit un tracé dans l'injecteur (13) de telle sorte que le fond (22') de l'alésage en trou borgne (16) est adjacent de l'espace de pression (17) de l'injecteur (13) servant de surface active.

10. Dispositif selon l'une des revendications 5 à 9, **caractérisé en ce qu'**un élément en forme de douille (23) est présent, lequel accueille une extrémité (21) de la fibre optique (11) faisant face au fond (22') et peut être inséré dans l'alésage en trou borgne (16) afin de régler un écart prédéterminé entre l'extrémité (21) de la fibre optique (11) et le fond (22') servant de surface active de l'alésage en trou borgne (16).

11. Dispositif selon la revendication 10, **caractérisé en ce que** l'élément en forme de douille (23) est formé en matériau absorbant la lumière.

12. Dispositif selon l'une des revendications précédentes, **caractérisé en ce que** la source de lumière émet une lumière à large bande spectrale, laquelle se trouve de préférence dans la plage spectrale des longueurs d'onde visible entre environ 350 nm et environ 680 nm.

13. Dispositif selon l'une des revendications précédentes, **caractérisé en ce qu'**au moins un détecteur photoélectrique est prévu afin de capter d'un côté la lumière réfléchie au niveau de la fibre à réseau de Bragg (12) et de l'autre côté la lumière renvoyée de la surface active (22') dans la fibre optique (11).

14. Dispositif selon la revendication 13, **caractérisé en ce qu'**au moins un élément à sélectivité spectrale est monté en amont du détecteur photoélectrique afin de décomposer, en fonction de la longueur d'onde, la lumière découplée hors de la fibre optique (11).

15. Dispositif selon la revendication 14, **caractérisé en ce que** l'au moins un élément à sélectivité spectrale est réalisé sous la forme d'un monochromateur.

16. Dispositif selon la revendication 14, **caractérisé en ce qu'**une extrémité (21') de la fibre optique (11) prévue pour le découplage de la lumière vers l'au moins un détecteur photoélectrique possède un revêtement d'iode.

17. Dispositif selon la revendication 14 ou 15, **caractérisé en ce que** la source de lumière et l'au moins un détecteur photoélectrique comprenant l'au moins un élément à sélectivité spectrale sont disposés au niveau d'une extrémité (21) de la fibre optique (11) orientée à l'opposé de la surface active (22').

18. Dispositif selon l'une des revendications 13 à 17, **caractérisé en ce que** les moyens d'interprétation comprennent une unité de calcul à processeur, laquelle est branchée en aval du détecteur photoélectrique.

19. Dispositif selon la revendication 18, **caractérisé en ce que** les moyens d'interprétation comprennent une unité électronique d'interprétation, laquelle sert d'interface entre le détecteur photoélectrique et l'unité de calcul à processeur.

20. Système d'injection de carburant, comprenant au moins un dispositif selon l'une des revendications 1 à 19.

21. Procédé pour faire fonctionner le dispositif selon l'une des revendications 1 à 19, de la lumière ayant au moins une propriété préalablement connue étant injectée dans l'injecteur et une modification de la propriété étant détectée dans la lumière renvoyée, **caractérisé en ce qu'**un premier signal optique et un deuxième signal optique sont formés, le premier signal optique, en tant que modification de la longueur d'onde de la lumière réfléchie au niveau de la fibre à réseau de Bragg par rapport à la lumière injectée, étant une mesure d'une force agissant sur la fibre optique depuis un espace de pression d'un injecteur, de la lumière provenant de la fibre optique en fonction d'un taux de déformation d'une surface active déformable en fonction de la pression étant renvoyée dans la fibre optique pour le deuxième signal optique, l'intensité de la lumière renvoyée, en tant que deuxième signal optique, étant une mesure pour une pression issue de l'espace de pression déformant la surface active.

22. Procédé selon la revendication 21, **caractérisé en ce que** les deux signaux optiques sont associés ensemble.

23. Procédé selon la revendication 21, **caractérisé en ce que** les deux signaux optiques sont associés ensemble afin de garantir la plausibilité de l'un des deux signaux à l'aide de l'autre signal respectif.

24. Procédé selon la revendication 21, **caractérisé en ce que** les deux signaux optiques sont associés ensemble par corrélation afin de déterminer notamment le comportement d'ouverture et de fermeture d'un pointeau de vanne de l'injecteur, notamment l'instant d'ouverture et de fermeture du pointeau de vanne.

25. Procédé selon la revendication 24, **caractérisé en ce que** pour former une corrélation, les deux signaux optiques sont convertis en valeurs de mesure électriques, la différence respective entre les valeurs de mesure du premier signal optique et les valeurs de mesure coïncidentes temporellement à celles-ci du deuxième signal optique étant identifiée pour un intervalle de temps de mesure respectif.
